# EUROPEAN PATENT APPLICATION

(11) **EP 4 686 189 A1**
(43) Date of publication of application: **28.01.2026**
(21) Application number: 24774630.8
(22) Date of filing: 01.03.2024
(51) Int. Cl.: H04N 5/222, G06T 19/00

(54) **IMAGE PROCESSING DEVICE, IMAGE PROCESSING METHOD, AND PROGRAM**

(30) Priority: 23.03.2023 JP 2023046802
(71) Applicant: Sony Group Corporation, Tokyo 108-0075 (JP)
(72) Inventor: HIROTA Yoichi, Tokyo 108-0075 (JP)
(74) Representative: MFG Patentanwälte Meyer-Wildhagen Meggle-Freund Gerhard PartG mbB
(86) International application number: PCT/JP2024/007830
(87) International publication number: WO 2024/195485

(57) **Abstract**

The present technology relates to an image processing apparatus, an image processing method, and a program that are able to accurately represent reflections appearing on a real object in an image obtained by capturing an image displayed on a display device and an image of the real object. A selection section generates a CG image that is to be displayed on a video wall and captured by a video camera by use of a three-dimensional model. A viewpoint position of an area of the CG image within an image capture range of the video camera is different from a viewpoint position of an area outside the image capture range. The present technology can be applied, for example, to a PC of a virtual production imaging system that includes a video camera, a video wall on which a CG image captured by the video camera is displayed, a PC, a video wall controller, and a depth sensor.

## Description

### [Technical Field]

The present technology relates to an image processing apparatus, an image processing method, and a program, and more particularly, to an image processing apparatus, an image processing method, and a program that are able to accurately represent reflections appearing on a real object in an image obtained by capturing an image displayed on a display device and an image of the real object.

### [Background Art]

In recent content production sites, virtual production has been attracting attention. The virtual production is performed by capturing images in a studio where a video wall equipped with one or more LEDs (Light Emitting Diodes) are installed instead of a traditional green screen. In the virtual production, a CG (Computer Graphics) image of a three-dimensional model is displayed on the video wall, and a content creator captures both the CG image and the image of a real object by using an image capture device. This makes it possible to not only composite the CG image and the image of the real object in real time, but also represent the transmission and reflection of light from the CG image relative to the real object in the captured image.

Meanwhile, there is an image processing system that estimates light source information including at least information indicating the position and intensity of a light source from a single-view wide-angle captured image captured at a wide viewing angle (see, for example, PTL 1).

### [Citation List]

### [Patent Literature]

[PTL 1] Japanese Patent Laid-open No. 2021-149679

### [Summary]

### [Technical Problem]

However, in an image obtained by capturing both the CG image displayed on a display device, such as the video wall, and the image of the real object, it has been difficult to accurately represent the reflections appearing on the real object.

In view of the above circumstances, the present technology has been made to make it possible to accurately represent reflections appearing on a real object in an image obtained by capturing an image displayed on a display device and an image of the real object.

### [Solution to Problem]

An image processing apparatus or a program according to an aspect of the present technology are an image processing apparatus or a program for causing a computer to function as an image processing apparatus including a generation section configured to generate an image that is to be displayed on a display device and captured by an image capture device, by use of a three-dimensional model, in which the image processing apparatus is configured such that a viewpoint position of an area of the image within an image capture range of the image capture device is different from a viewpoint position of an area outside the image capture range.

An image processing method according to another aspect of the present technology is an image processing method including a generation step of causing an image processing apparatus to generate an image that is to be displayed on a display device and captured by an image capture device, by use of a three-dimensional model, in which a viewpoint position of an area of the image within an image capture range of the image capture device is different from a viewpoint position of an area outside the image capture range.

In one aspect of the present technology, the three-dimensional model is used to generate an image that is to be displayed on a display device and captured by an image capture device. A viewpoint position of an area of the image within the image capture range of the image capture device is different from a viewpoint position of an area outside the image capture range.

### [Brief Description of Drawings]

[FIG. 1] FIG. 1 is a diagram illustrating an example of a configuration of an embodiment of an imaging system to which the present technology is applied.
[FIG. 2] FIG. 2 is a block diagram illustrating an example of a configuration of an image generation processing section.
[FIG. 3] FIG. 3 is a diagram illustrating a method of generating a camera perspective image.
[FIG. 4] FIG. 4 is another diagram illustrating the method of generating the camera perspective image.
[FIG. 5] FIG. 5 is a first diagram illustrating selection of the camera perspective image or of a real object perspective image.
[FIG. 6] FIG. 6 is a second diagram illustrating the selection of the camera perspective image or of the real object perspective image.
[FIG. 7] FIG. 7 is a third diagram illustrating the selection of the camera perspective image or of the real object perspective image.
[FIG. 8] FIG. 8 is a diagram illustrating an example of a CG image within an image capture range.
[FIG. 9] FIG. 9 is a diagram illustrating an example of a CG image outside the image capture range.
[FIG. 10] FIG. 10 is a diagram illustrating examples of imaging targets in a simulation.
[FIG. 11] FIG. 11 is a diagram illustrating an example of a simulation result obtained in a case where all imaging targets are present in a real space.
[FIG. 12] FIG. 12 is a diagram illustrating an example of the real space.
[FIG. 13] FIG. 13 is a diagram illustrating an example of the simulation result.
[FIG. 14] FIG. 14 is a diagram illustrating an example of the real space in the imaging system.
[FIG. 15] FIG. 15 is a flowchart illustrating an image generation process.
[FIG. 16] FIG. 16 is a flowchart illustrating details of a selection process.
[FIG. 17] FIG. 17 is a block diagram illustrating an example of a hardware configuration of a computer.

### [Description of Embodiment]

An embodiment for implementing the present technology (hereinafter referred to as an embodiment) will now be described. It should be noted that a description will be given in the following order.
1. One Embodiment (Imaging System)
2. Computer

### <1. One Embodiment>

### <Example Configuration of Imaging System>

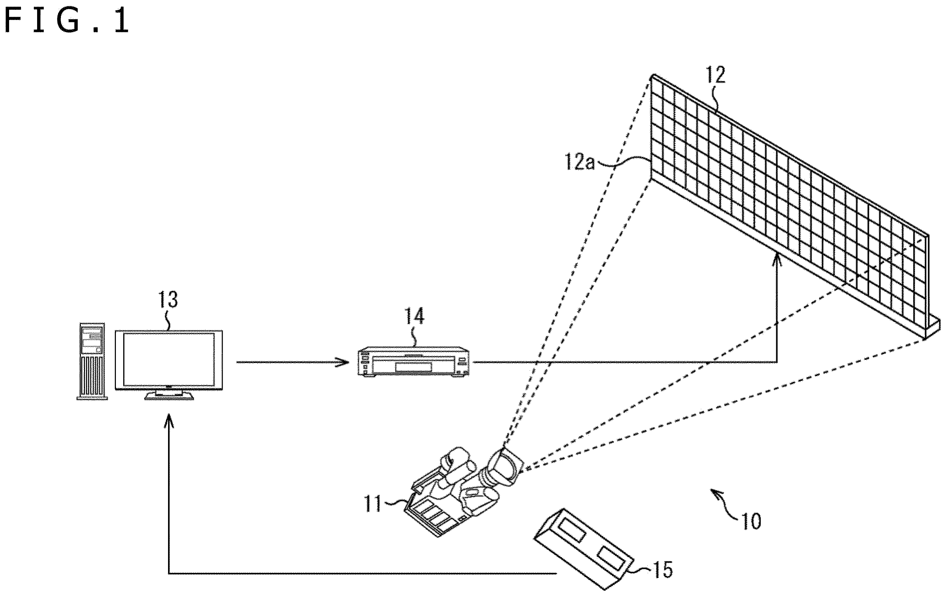

FIG. 1 is a diagram illustrating an example of a configuration of an embodiment of an imaging system to which the present technology is applied.

As depicted in FIG. 1, an imaging system 10, which is an imaging system for virtual production, includes a video camera 11, a video wall 12, a PC (personal computer) 13, a video wall controller 14, and a depth sensor 15. The imaging system 10 displays a CG image on the video wall 12 and uses the video camera 11 to perform imaging by using the CG image as a background.

Specifically, the video camera 11 is an image capture device that captures the CG image displayed on the video wall 12 as well as the image of a real object present in front of the video wall 12 (present on the side closer to the video camera 11). It should be noted that a plurality of video cameras similar to the video camera 11 may be used in the imaging system 10.

The video wall 12 (display device) is a large LED display in which n display units 12a (n is a positive integer) are arranged in tiles. In the example of FIG. 1, n is 6 × 24.

The display units 12a are each connected to the video wall controller 14. A CG image of an area corresponding to the position of each display unit 12a is supplied to each display unit 12a from the video wall controller 14. Each display unit 12a displays the CG image of each area, which is supplied from the video wall controller 14. Consequently, The CG image corresponding to one screen is displayed on the entire video wall 12. This display operation is synchronized with image capture by the video camera 11.

It should be noted that the shape of the display surface of the video wall 12 is a single rectangular plane in the example of FIG. 1 and is not limited to such a shape. For example, the shape of the display surface of the video wall 12 may be an arc-shaped curved surface, a U-shape formed by one plane and two side surfaces, a shape in which an additional plane is provided on at least one of the upper and lower parts of these shapes, or other shapes.

The PC 13 is an image processing device that uses a three-dimensional model to perform, for example, an image generation process for generating the CG image to be displayed on the video wall 12. The image generation process uses distance information supplied from the depth sensor 15, which indicates the distance between the video camera 11 and the real object present in front of the video wall 12. The PC 13 supplies the CG image, which is generated by the image generation process, to the video wall controller 14.

The video wall controller 14 divides the CG image supplied from the PC 13 into n areas according to the position of each display unit 12a and supplies the CG image of each area to each display unit 12a.

The depth sensor 15 is disposed near the video camera 11. For each real object present in front of the video wall 12, the depth sensor 15 measures the distance between the real object and the video camera 11 in three dimensions. For each real object, the depth sensor 15 supplies the distance information to the PC 13 as information representing the average value of measurement results and indicating the distance between the real object and the video camera 11.

It should be noted that the video wall controller 14 and the video wall 12 may be integrated with each other or integrated into a display device. Further, the PC 13, the video wall controller 14, and the video wall 12 may be integrated with each other, or integrated into a display device. The video camera 11 and the depth sensor 15 may be integrated with each other.

### <Example Configuration of Image Generation Processing Section>

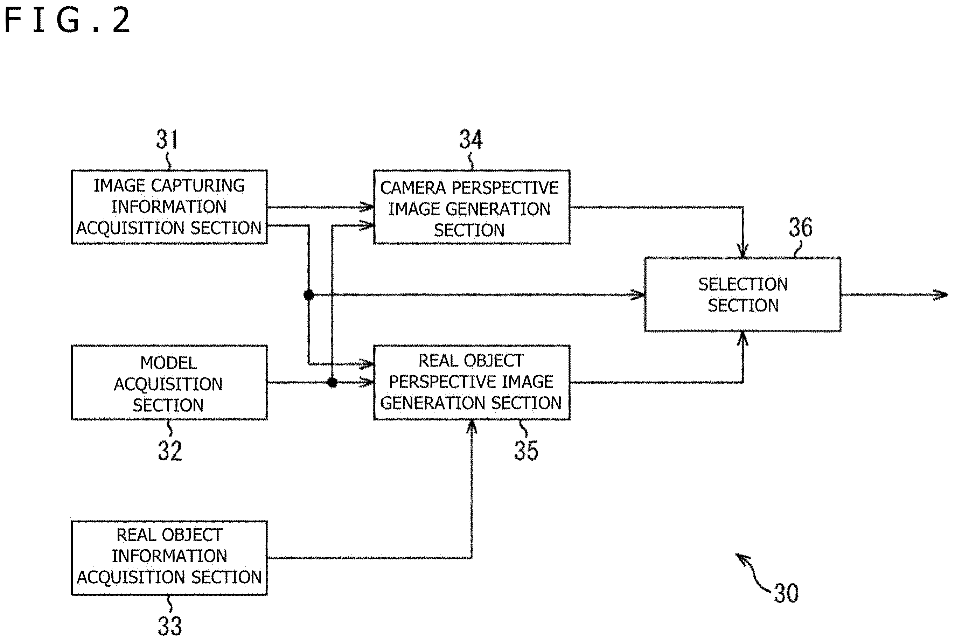

FIG. 2 is a block diagram illustrating an example of a configuration of an image generation processing section in a case where the PC 13 depicted in FIG. 1 functions as the image generation processing section for performing the image generation process.

The image generation processing section 30 depicted in FIG. 2 includes an image capturing information acquisition section 31, a model acquisition section 32, a real object information acquisition section 33, a camera perspective image generation section 34, a real object perspective image generation section 35, and a selection section 36.

The image capturing information acquisition section 31 acquires image capturing information, which is information regarding image capture, such as video camera information indicating, for example, the image capturing position and image capture range of the video camera 11, and video wall information indicating, for example, the position, shape, and size of the video wall 12. The image capture range is determined on the basis of, for example, the angle of view between the image capturing direction and the horizontal and vertical directions. The image capturing information may be inputted by a user or may be transmitted from the video camera 11 or the video wall 12.

The image capturing information acquisition section 31 supplies the image capturing position and the video wall information to the camera perspective image generation section 34. The image capturing information acquisition section 31 supplies the image capturing information to the real object perspective image generation section 35 and the selection section 36.

The model acquisition section 32 acquires a 3D model (CG object) in a virtual space that corresponds to the CG image to be displayed on the video wall 12. The 3D model may be stored in the PC 13 or may be acquired, for example, from a server external to the PC 13. The model acquisition section 32 supplies the 3D model to the camera perspective image generation section 34 and the real object perspective image generation section 35.

The real object information acquisition section 33 acquires the distance information from the depth sensor 15 depicted in FIG. 1 and supplies the distance information to the real object perspective image generation section 35.

The camera perspective image generation section 34 sets, as a viewpoint position, a position in the virtual space that corresponds to the image capturing position supplied from the image capturing information acquisition section 31. According to the viewpoint position and the video wall information, the camera perspective image generation section 34 generates a CG image (hereinafter referred to as the camera perspective image) for one screen of the video wall 12 from the 3D model supplied from the model acquisition section 32. The camera perspective image generation section 34 supplies the camera perspective image to the selection section 36.

The real object perspective image generation section 35 calculates the position of the real object according to the distance information supplied from the real object information acquisition section 33 and the image capturing position supplied from the image capturing information acquisition section 31. According to the position of the real object present within the image capture range, the real object perspective image generation section 35 determines, as the viewpoint position, a position in the virtual space that is different from the position in the virtual space that corresponds to the image capturing position.

For example, in a case where one real object is present within the image capture range, the real object perspective image generation section 35 determines, as the viewpoint position, a position in the virtual space that corresponds to the position of such a real object. In a case where a plurality of real objects is present within the image capture range, the real object perspective image generation section 35 determines, as the viewpoint position, a position in the virtual space that corresponds to an average value of the positions of the plurality of real objects. In a case where a plurality of real objects is present within the image capture range, the real object perspective image generation section 35 may determine, as the viewpoint position, a position in the virtual space that corresponds to a weighted average value of the positions of the plurality of real objects.

The weights for the positions of the plurality of real objects to be used for calculating the weighted average value can be set so as to become larger as the positions of the real objects become closer to the center of the image capture range. When the weights are set in the above manner, the reflections appearing on the real objects present in a central area that is focused on by a viewer of the image are preferentially and accurately represented in an image captured by the video camera 11.

The above weights can also be set so as to become larger as the positions of the real objects become closer to the video camera 11. When the weights are set in such a manner, the reflections appearing on the real objects that are focused on by and positioned near the viewer of the image are preferentially and accurately represented in the image captured by the video camera 11.

The above weights can also be set so as to become larger as the sizes of the real objects become larger. When the weights are set in such a manner, the reflections appearing on the large real objects that are focused on by the viewer of the image are preferentially and accurately represented in the image captured by the video camera 11.

The above weights can also be set so as to become larger as the reflectance of the real objects becomes higher. When the weights are set in such a manner, the reflections appearing on the real objects with high reflectance, such as real objects formed by metal or glass or white real objects, namely, real objects that are prone to reflections, are preferentially and accurately represented in the image captured by the video camera 11.

The above weights can also be set so as to become larger as the importance of the real objects in image capturing becomes higher. When the weights are set in such a manner, the reflections appearing on the real objects having high importance, such as a main character, are more preferentially and accurately represented in the image captured by the video camera 11 than the reflections appearing on the real objects having low importance, such as a supporting character. The sizes and reflectance of the real objects and the importance of the real objects in image capturing may be inputted by the user or may be determined on the basis of, for example, the image captured by the video camera 11.

According to the viewpoint position and the video wall information, the real object perspective image generation section 35 generates a CG image (hereinafter referred to as the real object perspective image) for one screen of the video wall 12 from the 3D model supplied from the model acquisition section 32. The real object perspective image generation section 35 supplies the real object perspective image to the selection section 36.

According to the image capturing information supplied from the image capturing information acquisition section 31, the selection section 36 divides the screen of the video wall 12 into an area within the image capture range and an area outside the image capture range. The selection section 36 extracts a CG image of the area within the image capture range from the camera perspective image for one screen supplied from the camera perspective image generation section 34. The selection section 36 extracts a CG image of the area outside the image capture range from the real object perspective image for one screen supplied from the real object perspective image generation section 35. The selection section 36 (generation section) composites the extracted CG image of the area within the image capture range with the extracted CG image of the area outside the image capture range to generate the CG image to be displayed on the video wall 12. The selection section 36 supplies the generated CG image to the video wall controller 14.

It should be noted that the CG image to be displayed on the video wall 12 may be generated by the selection section 36 after applying temporal smoothing to the composited CG image. In this case, it is possible to suppress fluctuations in the CG image due to, for example, temporary appearance or disappearance of a real object within the image capture range or measurement error of the depth sensor 15.

The longer the distance between the image capturing position of the video camera 11 and the position of the real object, the greater the difference between the camera perspective image and the real object perspective image. Therefore, the selection section 36 may perform CG image composition in such a manner that the CG image at the boundary between the area within the image capture range and the area outside the image capture range is blurred (blended) to a greater extent as the distance between the image capturing position of the video camera 11 and the position of the real object increases. Alternatively, in a case where the real object is positioned away from the image capturing position by a predetermined distance or more, the real object perspective image generation section 35 may change the position of the real object to a position that is away from the image capturing position by a predetermined distance. By doing the above, it is possible to improve the image quality of the CG image to be displayed on the video wall 12.

### <Description of Camera Perspective Image Generation Method>

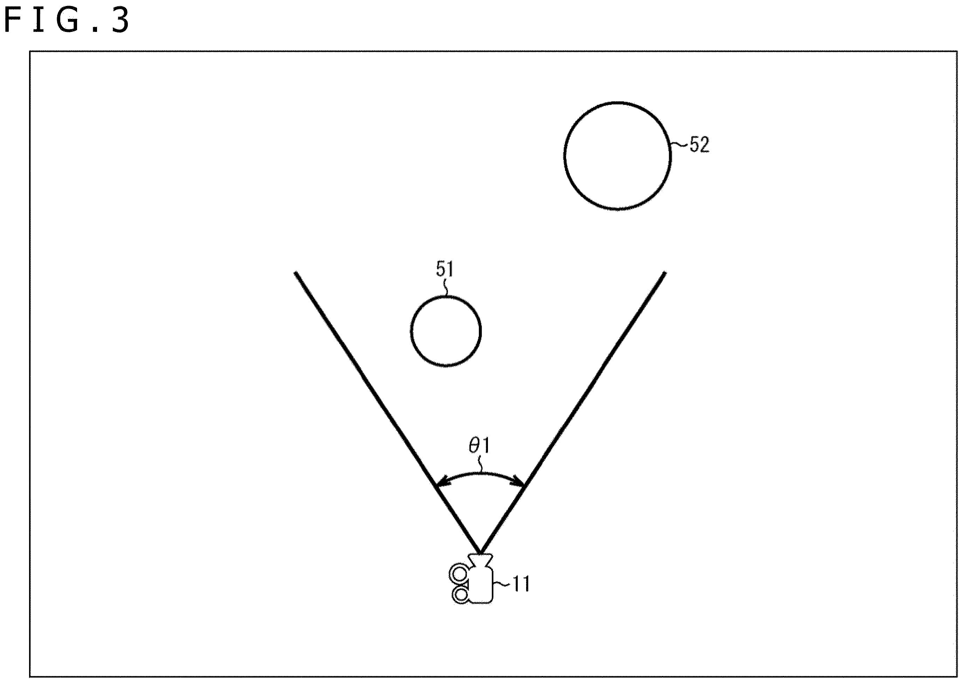

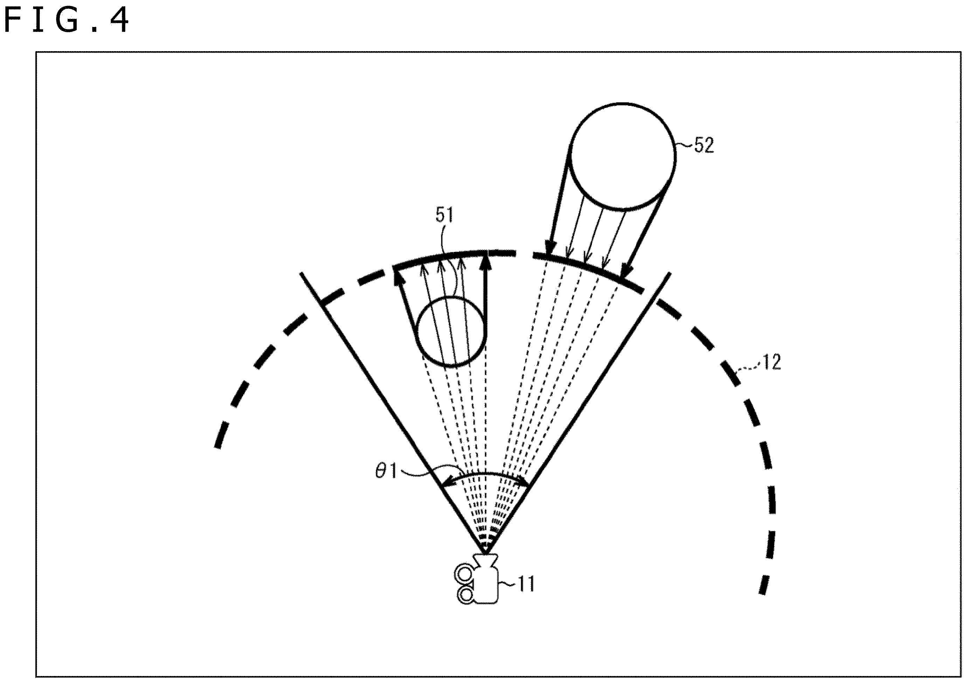

The camera perspective image generation method used by the camera perspective image generation section 34 depicted in FIG. 2 will now be described with reference to FIGS. 3 and 4.

FIG. 3 is a top view of a virtual space in which the video camera 11 is disposed of at a position in the virtual space that corresponds to a position in a real space (hereinafter referred to as a virtual position). FIG. 4 is a top view of a virtual space in which the video camera 11 and the video wall 12 are disposed at respective virtual positions.

In the examples of FIGS. 3 and 4, the horizontal angle of view of the video camera 11 is θ1, and two 3D models 51 and 52 are present in the virtual space within the image capture range. As depicted in FIG. 4, the 3D model 51 is present in front of the virtual position of the video wall 12, and the 3D model 52 is present behind the virtual position of the video wall 12 (on the side farther from the video camera 11).

In the above case, as depicted in FIG. 4, the camera perspective image generation section 34 generates, as the camera perspective image, a CG image that is obtained by projecting the 3D models 51 and 52 on the video wall 12 in the virtual space while the virtual position of the video camera 11 is used as the viewpoint position. In a case where the above camera perspective image is displayed on the video wall 12, the direction of light incident on the video camera 11 from the images of the 3D models 51 and 52 within the camera perspective image is the same as the direction of light directed to the video camera 11 from the 3D models 51 and 52 in the virtual space. Therefore, the image obtained by capturing the camera perspective image displayed on the video wall 12 is the same as the image captured in a case where the 3D models 51 and 52 are present in the real space.

However, in a case where the 3D model 51 (52) is displayed on the video wall 12, the position of the 3D model 51 (52) in the real space is a position on the video wall 12 and does not correspond to the position of the 3D model 51 (52) in the virtual space.

### <Description of Selection-by-Selection Section>

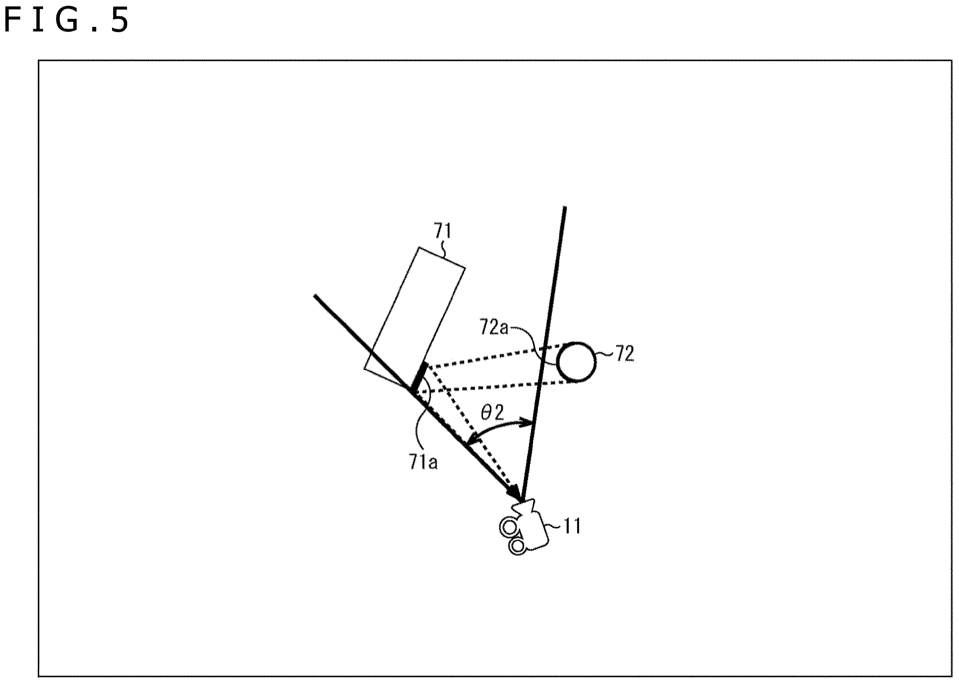

FIGS. 5 to 7 will now be referenced to describe how the selection section 36 selects the camera perspective image or the real object perspective image.

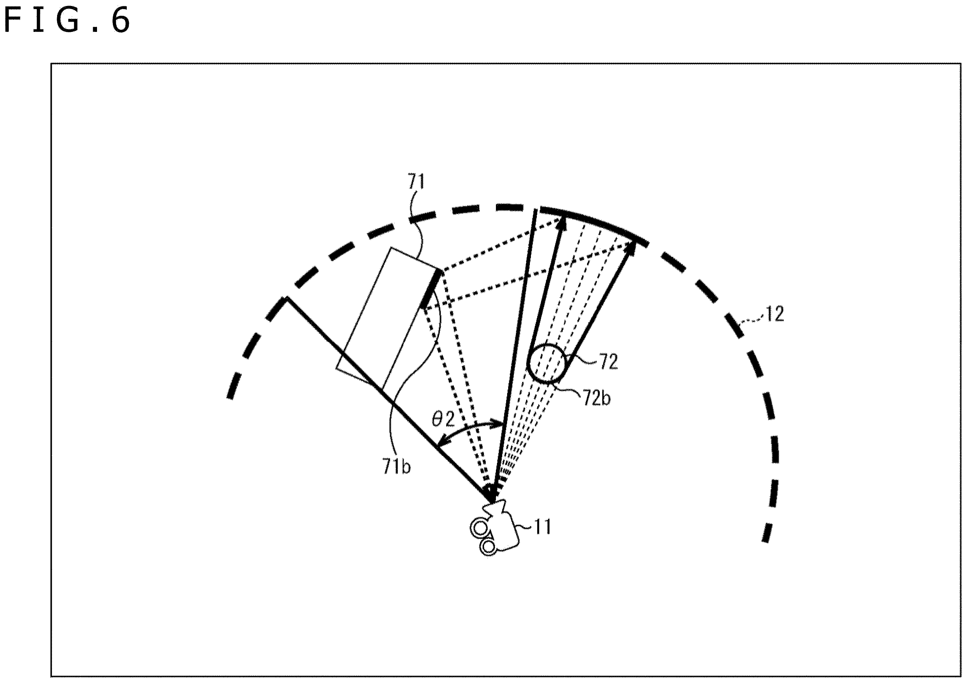

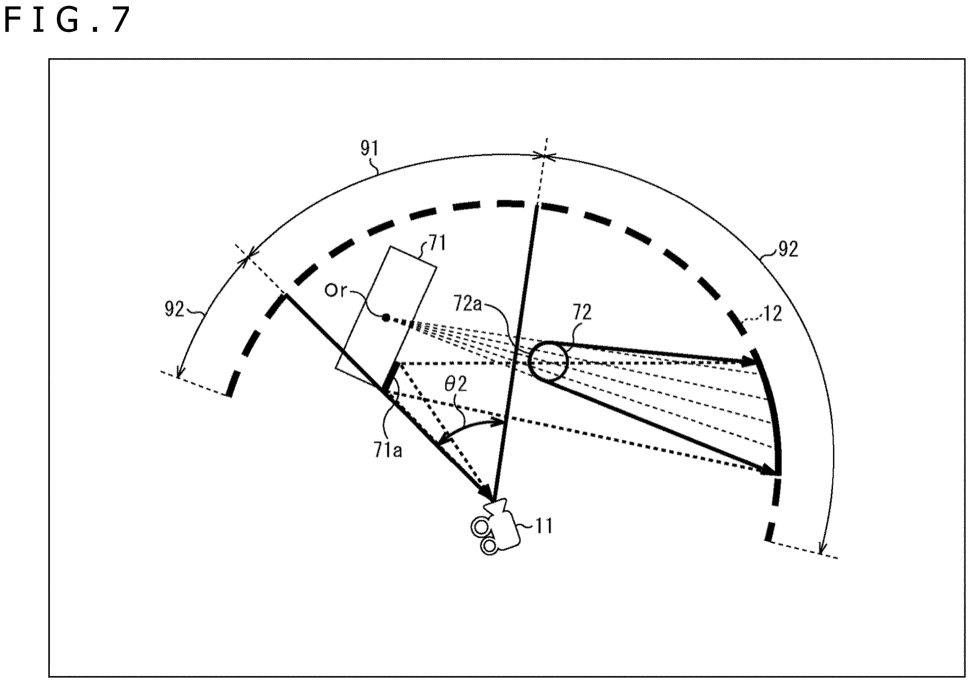

FIG. 5 is a top view of a virtual space in which the video camera 11 and a real object 71 are disposed at respective virtual positions. FIGS. 6 and 7 are top views of a virtual space in which the video camera 11, the video wall 12, and the real object 71 are disposed at respective virtual positions.

In the examples of FIGS. 5 to 7, the horizontal angle of view of the video camera 11 is θ2, the real object 71 is present in the real space within the image capture range, and a 3D model 72 is present in the virtual space outside the image capture range.

In the above case, when the 3D model 72 is present in the real space and when the reflectance of the real object 71 is high, the image captured by the video camera 11 will be subject to reflections from the real object 71. Ideally, the reflections occur in an area 71a on the front left side of the real object 71 as depicted in FIG. 5, and the reflections affect a surface 72a of the 3D model 72 that faces the real object 71 (the left side in FIG. 5).

However, as depicted in FIG. 6, the camera perspective image generated by the camera perspective image generation section 34 is a CG image in which the 3D model 72 is projected on the video wall 12 while the virtual position of the video camera 11 in the virtual space is used as the viewpoint position. Therefore, the camera perspective image includes an image of a surface 72b of the 3D model 72 that is on the side toward the video camera 11. Further, in a case where this camera perspective image is displayed on the video wall 12, the position of the surface 72b in the real space is a position on the video wall 12. As a result, when an image of the real object 71 is captured by the video camera 11 while this camera perspective image is displayed on the video wall 12, the surface 72b appears on an area 71b on the far right side of the real object 71 in the captured image due to the reflection on the real object 71.

In other words, the area 71b where the reflection appears on the real object 71 is different from the area 71a in the image that is captured by the video camera 11 when the 3D model 72 is present in the real space. The surface 72b of the 3D model 72 of which reflection appears on the real object 71, is also different from the surface 72a in the image that is captured by the video camera 11 when the 3D model 72 is present in the real space.

Meanwhile, as depicted in FIG. 7, the real object perspective image generated by the real object perspective image generation section 35 is a CG image in which the 3D model 72 is projected on the video wall 12 while the virtual position Or of the real object 71 in the virtual space is used as the viewpoint position. Therefore, the real object perspective image includes an image of the surface 72a of the 3D model 72 that is on the side toward the real object 71. Further, in a case where this real object perspective image is displayed on the video wall 12, the direction of light incident on the real object 71 from the image of the surface 72a in the real object perspective image is the same as the direction of light directed to the real object 71 from the 3D model 72 in the virtual space. As a result, when an image of the real object is captured by the video camera 11 while this real object perspective image is displayed on the video wall 12, the surface 72a appears on the area 71a in front of the real object 71 in the image captured by the video camera 11 due to the reflection on the real object 71. That is, this real object perspective image is the same as the image captured in a case where the 3D model 72 is present in the real space.

As described above, displaying the real object perspective image on the video wall 12 makes it possible to generate an accurate reflection appearing on the real object 71. However, the real object perspective image is a CG image in which the virtual position of the real object 71 is used as the viewpoint position. Therefore, when the real object perspective image is displayed within the image capture range of the video wall 12, the CG image captured by the video camera 11 is no longer a CG image desired by a cameraperson in which the virtual position of the video camera 11 is used as the viewpoint position.

Consequently, the selection section 36 selects the camera perspective image as a CG image of an area 91 within the image capture range of the screen of the video wall 12 and selects the real object perspective image as a CG image of an area 92 outside the image capture range. The selection section 36 then composites the camera perspective image of the area 91 with the real object perspective image of the area 92 to generate a CG image that is to be displayed on the video wall 12.

### <Examples of CG Images Displayed on Video Wall>

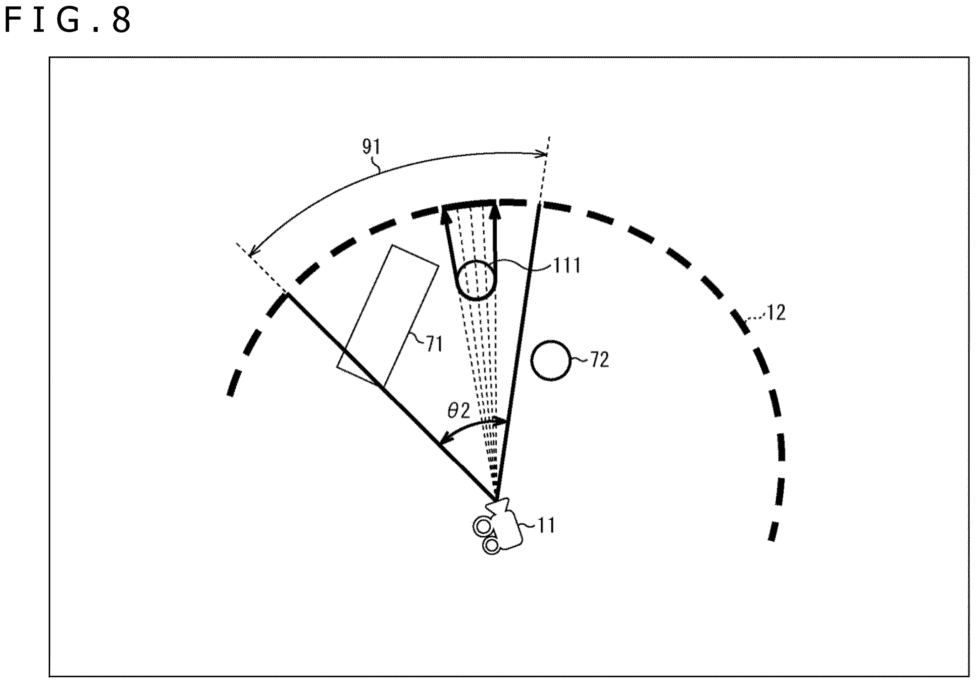

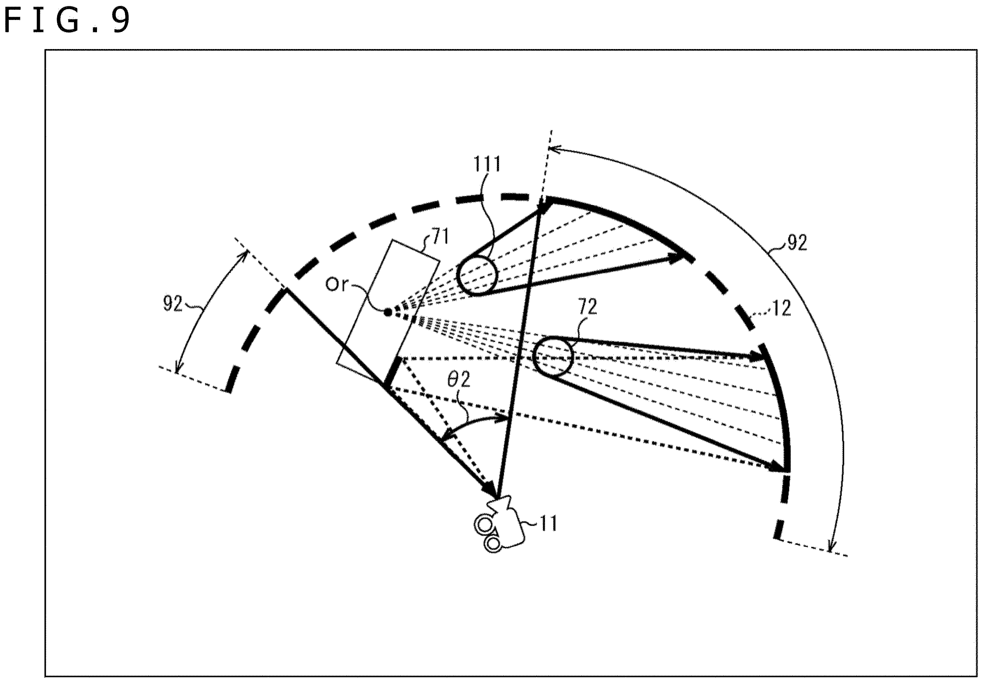

Examples of CG images displayed on the video wall 12 will now be described with reference to FIGS. 8 and 9.

FIGS. 8 and 9 are top views of a virtual space in which the video camera 11, the video wall 12, and the real object 71 are disposed at respective virtual positions. In FIGS. 8 and 9, parts corresponding to those depicted in FIGS. 5 to 7 are designated by the same reference signs as their counterparts. Therefore, the description of such parts will be omitted as appropriate, and the subsequent description will focus on the parts that are different from those depicted in FIGS. 5 to 7. The examples depicted in FIGS. 8 and 9 differ from those depicted in FIGS. 5 to 7 in that a 3D model 111 is present in the virtual space within the image capture range. In the other respects, however, the examples in FIGS. 8 and 9 are similar to those in FIGS. 5 to 7.

In this case, as depicted in FIG. 8, the camera perspective image, which is obtained by projecting the 3D model 111 on the video wall 12 while the virtual position of the video camera 11 in the virtual space is used as the viewpoint position, is displayed in the area 91 (inner frustum) within the image capture range of the video wall 12.

Meanwhile, as depicted in FIG. 9, the real object perspective image, which is obtained by projecting the 3D models 72 and 111 on the video wall 12 while the virtual position Or of the real object 71 in the virtual space is used as the viewpoint position, is displayed in the area 92 (outer frustum) outside the image capture range of the video wall 12.

### <Examples of Imaging Targets in Simulation>

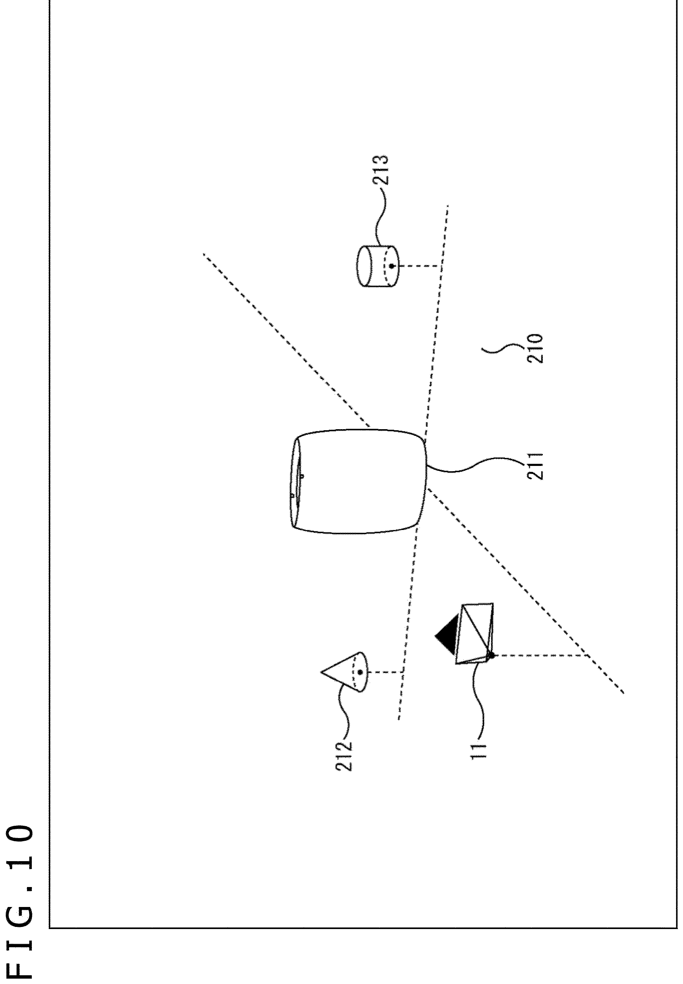

FIG. 10 is a diagram illustrating examples of imaging targets in a simulation for demonstrating the effectiveness of the image generation processing section 30.

The imaging targets 211 to 213 depicted in FIG. 10 are disposed parallel to a floor surface 210 and perpendicular to the image capturing direction of the video camera 11. That is, the imaging targets 211-213 are spaced apart from the video camera 11 by the same distance in the image capturing direction (depth direction).

### <Example Result of Simulation of Captured Image in Case Where All Imaging Targets Are in Real Space>

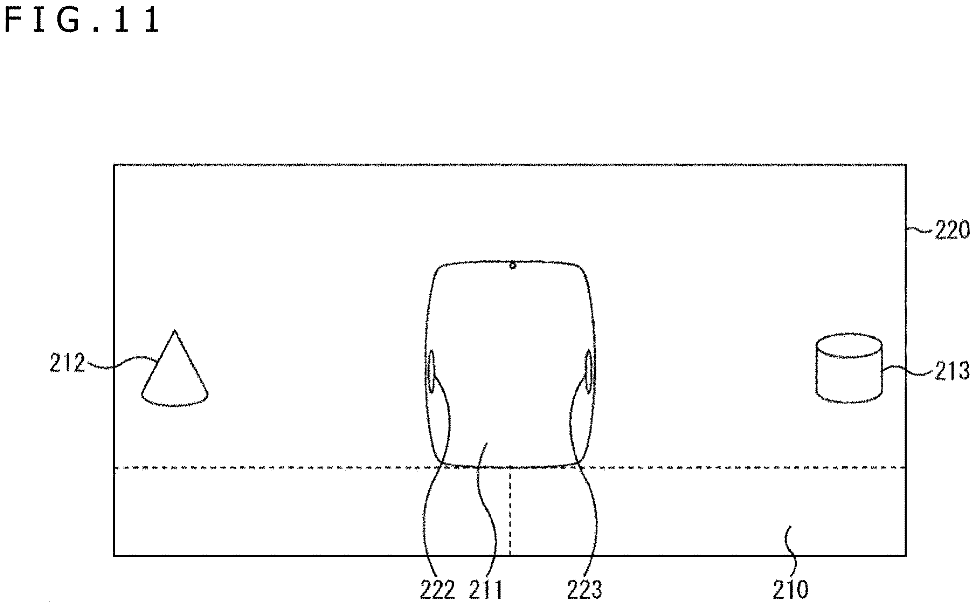

FIG. 11 is a diagram illustrating an example result of simulation of an image captured by the video camera 11 in a case where all the imaging targets 211 to 213 depicted in FIG. 10 are present in the real space.

FIG. 11 presents an image 220 including the imaging targets 211, 212, and 213 at the center, the left, and the right, respectively, and includes the floor surface 210 below. Here, the reflectance of the imaging target 211 is high. Therefore, the imaging target 212 is reflected on an area 222 that is positioned to the left of the imaging target 211, and the imaging target 213 is reflected on an area 223 that is positioned to the right of the imaging target 211.

### <Example of Real Space in Case Where Imaging Targets Are Reproduced Only by Camera Perspective Images>

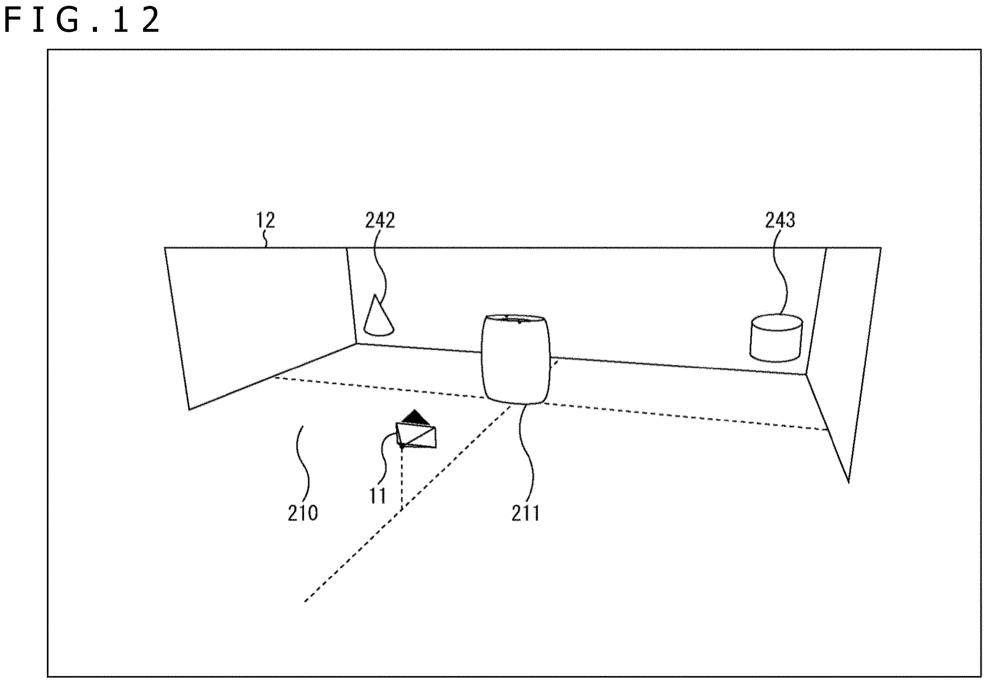

FIG. 12 is a diagram illustrating an example of the real space in a case where the imaging targets 212 and 213 depicted in FIG. 10 are reproduced only by the camera perspective images.

In the above case, as depicted in FIG. 12, the camera perspective image for one screen including a CG image 242 corresponding to the imaging target 212 and a CG image 243 corresponding to the imaging target 213 are displayed on the video wall 12.

The CG image 242 (243) is generated by projecting a 3D model corresponding to the imaging target 212 (213) onto the video wall 12 while using the virtual position of the video camera 11 in the virtual space as the viewpoint position. Therefore, the direction of light incident on the video camera 11 from the CG image 242 (243) is the same as the direction of light incident on the video camera 11 from the 3D model corresponding to the imaging target 212 (213) in the virtual space.

However, the position of the CG image 242 (243) is a position on the video wall 12 and not the position of the imaging target 212 (213).

### <Example Result of Simulation of Captured Image in Case Where Imaging Targets Are Reproduced Only by Camera Perspective Images>

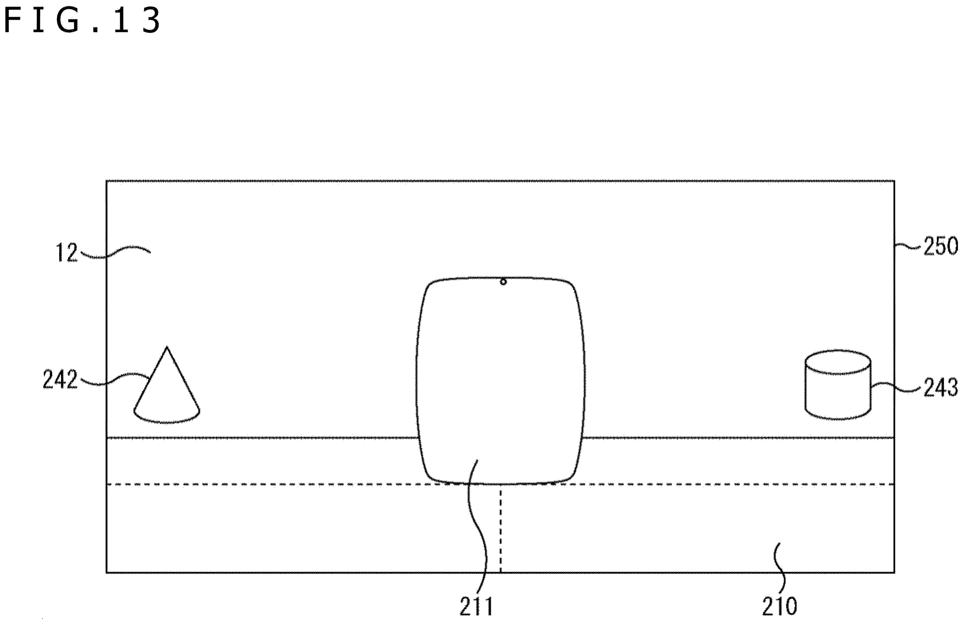

FIG. 13 is a diagram illustrating an example result of simulation of an image captured by the video camera 11 in the real space depicted in FIG. 12.

FIG. 13 presents an image 250 that includes the CG image 242 at the center, the floor surface 210 below, and the video wall 12 above. The left and right sides of the video wall 12 include the CG image 242 and the CG image 243, respectively.

However, as described with reference to FIG. 12, the position of the CG image 242 (243) is a position on the video wall 12 and is different from the position of the imaging target 212 (213). Therefore, even in a case where the imaging target 211 has a high reflectance, the CG image 242 (243) is not reflected on the imaging target 211 in the image 250.

### <Example of Real Space in Case Where Imaging Targets Are Reproduced by CG Images Generated by Image Generation Processing Section>

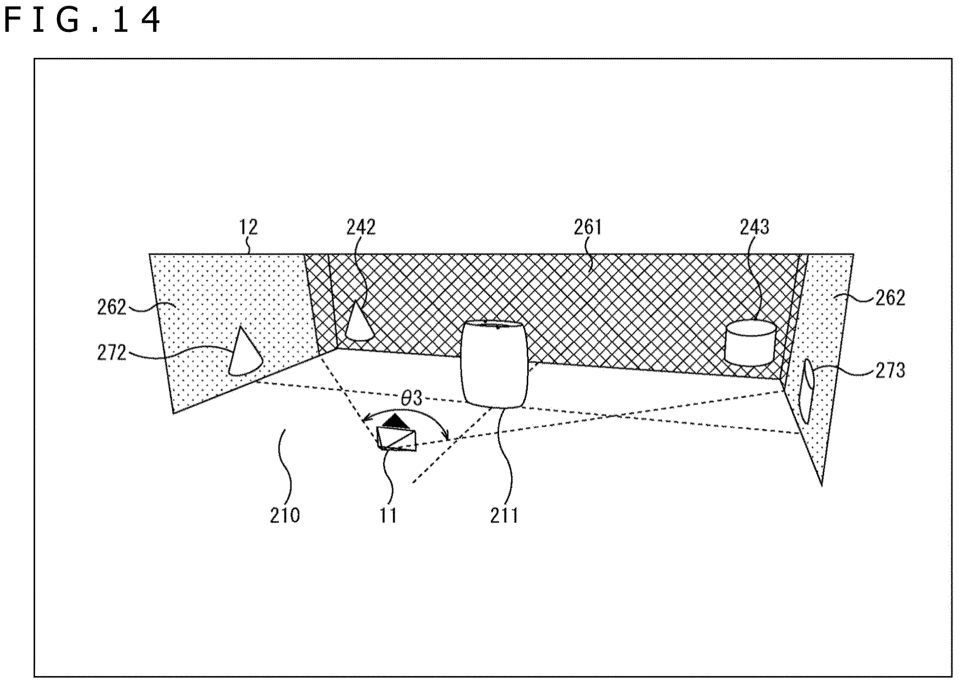

FIG. 14 is a diagram illustrating an example of the real space in a case where the imaging targets 212 and 213 depicted in FIG. 10 are reproduced by CG images generated by the image generation processing section 30.

It should be noted that, in FIG. 14, parts corresponding to those depicted in FIG. 12 are designated by the same reference signs as their counterparts. Therefore, the description of such parts will be omitted as appropriate, and the subsequent description will focus on the parts that are different from those depicted in FIG. 12.

In the case where the imaging targets 212 and 213 are reproduced by CG images generated by the image generation processing section 30, the camera perspective image including the CG images 242 and 243 is displayed in an area 261 within the image capture range of the video wall 12 as depicted in FIG. 14. It should be noted that, in the example of FIG. 14, the horizontal angle of view of the video camera 11 is θ3.

The real object perspective image including a CG image 272 corresponding to the imaging target 212 and a CG image 273 corresponding to the imaging target 213 is displayed in an area 262 outside the image capture range of the video wall 12.

The CG image 272 (273) is generated by projecting a 3D model corresponding to the imaging target 212 (213) onto the video wall 12 while using the virtual position of the imaging target 211, which is a real object within the image capture range, as the viewpoint position. Therefore, the direction of light incident on the imaging target 211 from the CG image 272 (273) is the same as the direction of light incident on the imaging target 211 from the 3D model corresponding to the imaging target 212 (213) in the virtual space.

The result of simulation of an image captured by the video camera 11 in the real space depicted in FIG. 14 is found to be the same as that of the image 220 depicted in FIG. 11. As a result, it can be said that the image generation processing section 30 is able to generate CG images, which are to be displayed on the video wall 12, in such a manner as to accurately represent reflections appearing on the imaging target 211 in an image captured by the video camera 11.

### <Description of Image Generation Process>

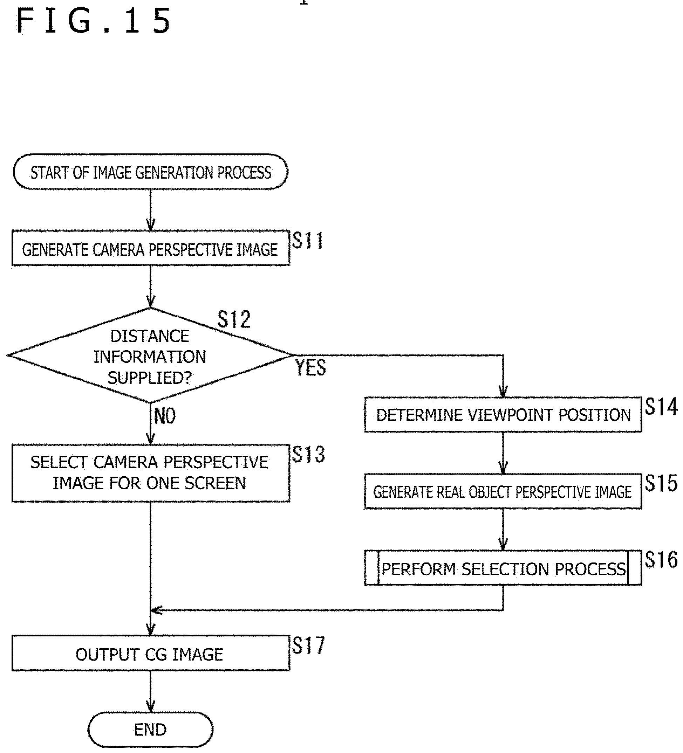

FIG. 15 is a flowchart illustrating the image generation process that is performed by the image generation processing section 30 depicted in FIG. 2. This image generation process is performed, for example, for each screen (frame) of the video wall 12.

In step S11 of FIG. 15, according to the image capturing position and video wall information acquired by the image capturing information acquisition section 31, the camera perspective image generation section 34 generates the camera perspective image for one screen of the video wall 12 from a 3D model acquired by the model acquisition section 32. The camera perspective image generation section 34 supplies the generated camera perspective image to the selection section 36.

In step S12, the real object information acquisition section 33 determines whether or not the distance information is supplied from the depth sensor 15, that is, whether or not the distance between the real object and the video camera 11 is successfully measured in three dimensions by use of the depth sensor 15.

If it is determined in step S12 that the distance information is not supplied from the depth sensor 15, namely, the distance between the real object and the video camera 11 is not successfully measured in three dimensions by use of the depth sensor 15, the processing proceeds to step S13. In step S13, the selection section 36 selects, as the CG image to be displayed by the video wall controller 14, the camera perspective image for one screen supplied from the camera perspective image generation section 34.

Meanwhile, if it is determined in step S12 that the distance information is supplied from the depth sensor 15, namely, the distance between the real object and the video camera 11 is successfully measured in three dimensions by use of the depth sensor 15, the real object information acquisition section 33 acquires the supplied distance information. The real object information acquisition section 33 then supplies the acquired distance information to the real object perspective image generation section 35 and causes the processing to proceed to step S14.

In step S14, the real object perspective image generation section 35 determines the viewpoint position according to the distance information supplied from the real object information acquisition section 33 and the video camera information acquired by the image capturing information acquisition section 31.

In step S15, according to the viewpoint position determined by the processing performed in step S14 and the video wall information, the real object perspective image generation section 35 generates the real object perspective image for one screen of the video wall 12 from the 3D model acquired by the model acquisition section 32. The real object perspective image generation section 35 supplies the generated real object perspective image to the selection section 36.

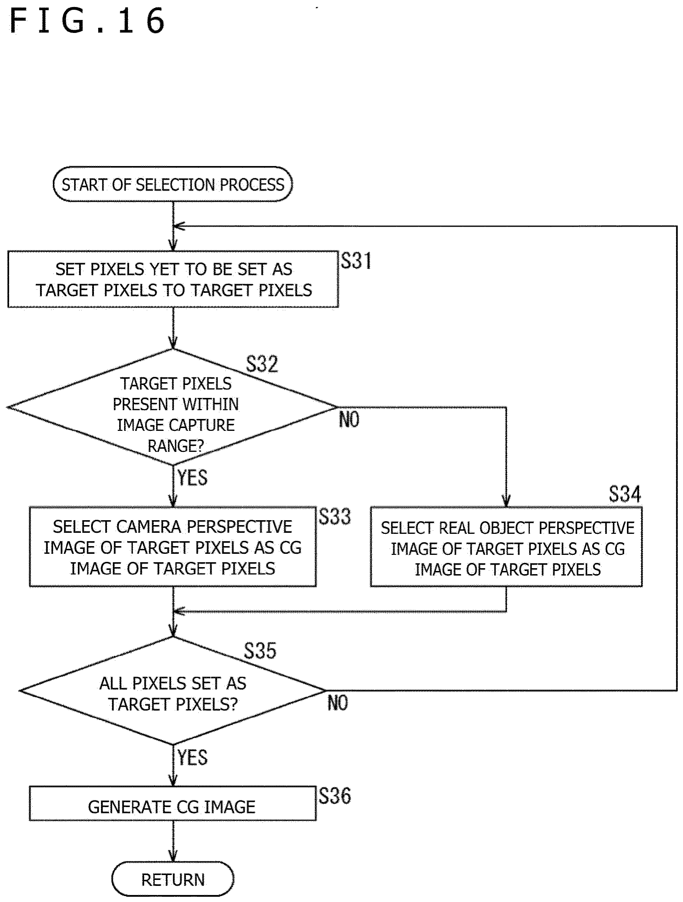

In step S16, for each pixel, the selection section 36 performs a selection process for selecting, for each pixel, the camera perspective image generated in step S11 or the real object perspective image generated in step S15 as the CG image to be displayed on the video wall 12. The selection process will be described in detail later with reference to FIG. 16. Upon completion of step S16, the processing proceeds to step S17.

In step S17, the selection section 36 outputs the CG image selected in step S13 or S16 to the video wall controller 14. As a result, in a case where the distance between the real object and the video camera 11 is not successfully measured in three dimensions by use of the depth sensor 15, the camera perspective image is displayed on the entire screen of the video wall 12. Meanwhile, in a case where the distance between the real object and the video camera 11 is successfully measured in three dimensions by use of the depth sensor 15, the camera perspective image or the real object perspective image selected in the selection process for each pixel is displayed on the video wall 12. Upon completion of step S17, the image generation process ends.

### <Description of Selection Process>

FIG. 16 is a flowchart illustrating details of the selection process performed in step S16 of FIG. 15.

In step S31 of FIG. 16, the selection section 36 sets, pixels yet to be set as the target pixels among all pixels for one screen of the video wall 12, to the target pixels. In step S32, the selection section 36 determines, according to the image capturing information acquired by the image capturing information acquisition section 31, whether or not the target pixels are present within the image capture range.

If it is determined in step S32 that the target pixels are present within the image capture range, the processing proceeds to step S33. In step S33, the selection section 36 extracts the camera perspective image of the target pixels from the camera perspective image for one screen supplied from the camera perspective image generation section 34 and selects the extracted camera perspective image as the CG image of the target pixels. Subsequently, the processing proceeds to step S35.

Meanwhile, if it is determined in step S32 that the target pixels are not present within the image capture range, the processing proceeds to step S34. In step S34, the selection section 36 extracts the real object perspective image of the target pixels from the real object perspective image for one screen supplied from the real object perspective image generation section 35 and selects the extracted real object perspective image as the CG image of the target pixels. Subsequently, the processing proceeds to step S35.

In step S35, the selection section 36 determines whether or not all the pixels for one screen of the video wall 12 are set as the target pixels in the processing performed in step S31. If it is determined in step S35 that all the pixels for one screen are yet to be set as the target pixels, the processing returns to step S31 to repeat steps S31 and beyond.

Meanwhile, if it is determined in step S35 that all the pixels for one screen are set as the target pixels, the processing proceeds to step S36. In step S36, the selection section 36 composites the CG images of the pixels selected in step S33 or S34 to generate the CG image to be displayed on the video wall 12. As a result, a CG image in which the camera perspective image is displayed in an area within the image capture range and the real object perspective image is displayed in an area outside the image capture range is generated as the CG image to be displayed on the video wall 12. Upon completion of step S36, the processing returns to step S16 of FIG. 15 and then proceeds to step S17.

As described above, the selection section 36 uses the three-dimensional model to generate the CG image to be displayed on the video wall 12 and captured by the video camera 11 in such a manner that the generated CG image has different viewpoint positions between an area within the image capture range and an area outside the image capture range. For example, the selection section 36 generates, as the CG image to be displayed on the video wall 12, a CG image in which the viewpoint position of the area within the image capture range is the virtual position of the video camera 11 and the viewpoint position of the area outside the image capture range is the virtual position of the real object. Therefore, it is possible to accurately represent the reflections appearing on the real object in the image obtained by capturing the CG image displayed on the video wall 12 and the image of the real object.

It should be noted that the depth sensor 15 may be substituted by another device as long as it is able to measure the distance between the real object and the image capturing position in three dimensions. The imaging system 10 may not include the depth sensor 15 and may allow, for example, the real object information acquisition section 33 to measure the distance between the real object and the image capturing position from an image including a real object image captured by the video camera 11 in three dimensions by use of, for instance, a person detection technology. The three-dimensional measurement may be made by the video camera 11 or may alternatively be made by an apparatus other than the video camera 11 and the PC 13.

### <2. Computer>

The above-described series of processes can be performed by hardware or by software. In a case where the series of processes is to be performed by software, programs included in the software are installed on a computer. Here, the computer may be a computer incorporated in dedicated hardware or a general-purpose personal computer or other computer capable of performing various functions when various programs are installed on the computer.

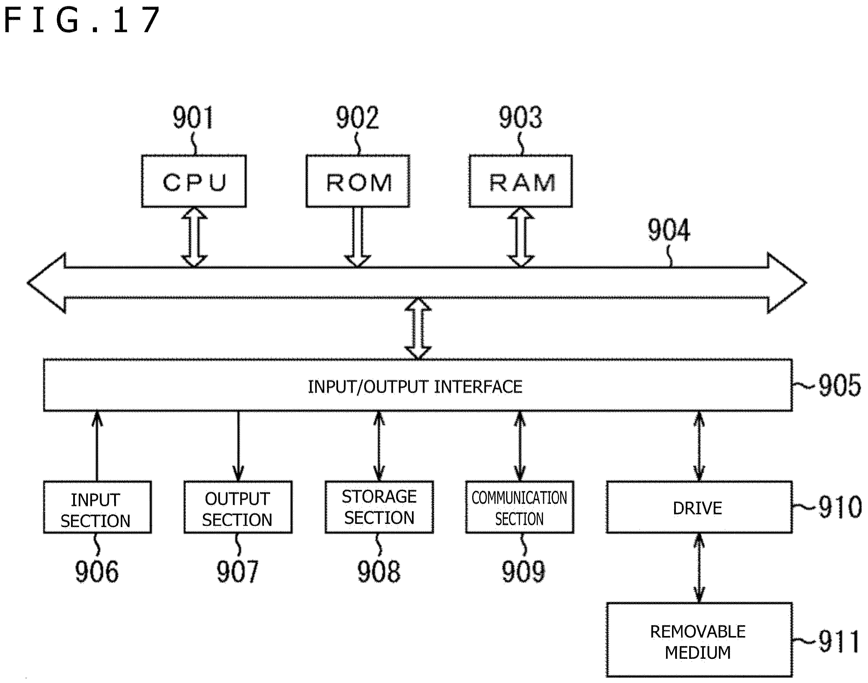

FIG. 17 is a block diagram illustrating an example of a hardware configuration of a computer that executes programs to perform the above-described series of processes.

In the computer, a CPU (Central Processing Unit) 901, a ROM (Read Only Memory) 902, and a RAM (Random Access Memory) 903 are interconnected by a bus 904.

The bus 904 is further connected to an input/output interface 905. The input/output interface 905 is connected to an input section 906, an output section 907, a storage section 908, a communication section 909, and a drive 910.

The input section 906 includes, for example, a keyboard, a mouse, and a microphone. The output section 907 includes, for example, a display and a speaker. The storage section 908 includes, for example, a hard disk and a non-volatile memory. The communication section 909 includes, for example, a network interface. The drive 910 drives a removable medium 911 such as a magnetic disk, an optical disk, a magneto-optical disk, or a semiconductor memory.

In the computer configured as described above, the CPU 901 performs the above-described series of processes, for example, by loading the programs stored in the storage section 908 into the RAM 903 through the input/output interface 905 and the bus 904 and executing the loaded programs.

The programs to be executed by the computer (CPU 901) can be recorded and supplied, for example, on the removable medium 911, serving, for example, as a package medium. Further, the programs can be supplied through a wired or wireless transmission medium such as a local area network, the Internet, or a digital satellite broadcasting system.

The computer is configured such that the programs can be installed in the storage section 908 through the input/output interface 905 when the removable medium 911 is inserted into the drive 910. Moreover, the programs can be received by the communication section 909 through a wired or wireless transmission medium and installed in the storage section 908. Further, the programs can be pre-installed in the ROM 902 or the storage section 908.

It should be noted that the programs to be executed by the computer may perform processing in a chronological order described in this document or perform processing in a parallel manner or at a required time point in response, for example, to a program call.

The embodiment of the present technology is not limited to the foregoing embodiment and can be variously modified without departing from the spirit and scope of the present technology.

For example, the present technology can be configured for cloud computing in which one function is shared by a plurality of apparatuses through a network in order to perform processing in a collaborative manner.

Moreover, each step described with reference to the foregoing flowcharts can be not only performed by one apparatus but also performed in a shared manner by a plurality of apparatuses.

Additionally, in a case where a plurality of processes is included in a single step, the plurality of processes included in such a single step can be not only performed by one apparatus but also performed in a shared manner by a plurality of apparatuses.

It should be noted that the advantages described in this document are merely illustrative and not restrictive. The present technology can additionally provide advantages other than those described in this document.

The present technology can adopt the following configurations.
(1) An image processing apparatus including:
   a generation section configured to generate an image that is to be displayed on a display device and captured by an image capture device, by use of a three-dimensional model,
   in which the image processing apparatus is configured such that a viewpoint position of an area of the image within an image capture range of the image capture device is different from a viewpoint position of an area outside the image capture range.
(2) An image processing method including:
   a generation step of causing an image processing apparatus to generate an image that is to be displayed on a display device and captured by an image capture device, by use of a three-dimensional model,
   in which a viewpoint position of an area of the image within an image capture range of the image capture device is different from a viewpoint position of an area outside the image capture range.
(3) A program for causing a computer to function as:
   an image processing apparatus including a generation section configured to generate an image that is to be displayed on a display device and captured by an image capture device, by use of a three-dimensional model,
   in which the image processing apparatus is configured such that a viewpoint position of an area of the image within an image capture range of the image capture device is different from a viewpoint position of an area outside the image capture range.
(4) The program according to (3) above,
   in which the viewpoint position of an area within the image capture range corresponds to a position of the image capture device, and
   the viewpoint position of the area outside the image capture range is determined on the basis of a position of a real object present within the image capture range.
(5) The program according to (4) above, in a case in which one real object is present within the image capture range, further including:
   a determination step of determining the position of the real object as the viewpoint position of the area outside the image capture range.
(6) The program according to (4) above, in a case in which a plurality of real objects is present within the image capture range, further including:
   a determination step of determining an average value of positions of the plurality of real objects as the viewpoint position of the area outside the image capture range.
(7) The program according to (6) above,
   in which the determination step determines a weighted average value of the positions of the plurality of real objects as the viewpoint position of the area outside the image capture range.
(8) The program according to (7) above,
   in which weights for the positions of the plurality of real objects that are used for calculating the weighted average value are set so as to become larger as the positions of the real objects become closer to a center of the image capture range.
(9) The program according to (7) or (8) above,
   in which weights for the positions of the plurality of real objects that are used for calculating the weighted average value are set so as to become larger as the positions of the real objects become closer to the image capture device.
(10) The program according to any one of (7) to (9) above,
   in which weights for the positions of the plurality of real objects that are used for calculating the weighted average value are set so as to become larger as the sizes of the real objects become larger.
(11) The program according to any one of (7) to (10) above,
   in which weights for the positions of the plurality of real objects that are used for calculating the weighted average value are set so as to become larger as the reflectance of the real objects becomes higher.
(12) The program according to any one of (7) to (11) above,
   in which weights for the positions of the plurality of real objects that are used for calculating the weighted average value are set so as to become larger as the importance of the real objects becomes higher in the image capturing.
(13) The program according to any one of (3) to (12) above,
   in which, in a process of the generation step, temporal smoothing is applied to the image.

### [Reference Signs List]

11: Video camera
12: Video wall
13: PC
36: Selection section
51, 52, 71: 3D model
72: Real object
91, 92: Area
111: 3D model
211 to 213: Imaging target
242, 243: CG image
261, 262: Area
272, 273: CG image

## Claims

1. An image processing apparatus comprising:
a generation section configured to generate an image that is to be displayed on a display device and captured by an image capture device, by use of a three-dimensional model,
wherein the image processing apparatus is configured such that a viewpoint position of an area of the image within an image capture range of the image capture device is different from a viewpoint position of an area outside the image capture range.

2. An image processing method comprising:
a generation step of causing an image processing apparatus to generate an image that is to be displayed on a display device and captured by an image capture device, by use of a three-dimensional model,
wherein a viewpoint position of an area of the image within an image capture range of the image capture device is different from a viewpoint position of an area outside the image capture range.

3. A program for causing a computer to function as:
an image processing apparatus including a generation section configured to generate an image that is to be displayed on a display device and captured by an image capture device, by use of a three-dimensional model,
wherein the image processing apparatus is configured such that a viewpoint position of an area of the image within an image capture range of the image capture device is different from a viewpoint position of an area outside the image capture range.

4. The program according to claim 3,
wherein the viewpoint position of an area within the image capture range corresponds to a position of the image capture device, and
the viewpoint position of the area outside the image capture range is determined on a basis of a position of a real object present within the image capture range.

5. The program according to claim 4, in a case in which one real object is present within the image capture range, further comprising:
a determination step of determining the position of the real object as the viewpoint position of the area outside the image capture range.

6. The program according to claim 4, in a case in which a plurality of real objects is present within the image capture range, further comprising:
a determination step of determining an average value of positions of the plurality of real objects as the viewpoint position of the area outside the image capture range.

7. The program according to claim 6,
wherein the determination step determines a weighted average value of the positions of the plurality of real objects as the viewpoint position of the area outside the image capture range.

8. The program according to claim 7,
wherein weights for the positions of the plurality of real objects that are used for calculating the weighted average value are set so as to become larger as the positions of the real objects become closer to a center of the image capture range.

9. The program according to claim 7,
wherein weights for the positions of the plurality of real objects that are used for calculating the weighted average value are set so as to become larger as the positions of the real objects become closer to the image capture device.

10. The program according to claim 7,
wherein weights for the positions of the plurality of real objects that are used for calculating the weighted average value are set so as to become larger as the sizes of the real objects become larger.

11. The program according to claim 7,
wherein weights for the positions of the plurality of real objects that are used for calculating the weighted average value are set so as to become larger as the reflectance of the real objects becomes higher.

12. The program according to claim 7,
wherein weights for the positions of the plurality of real objects that are used for calculating the weighted average value are set so as to become larger as the importance of the real objects becomes higher in the image capturing.

13. The program according to claim 3,
wherein the generation section applies temporal smoothing to the image.
